# EUROPEAN PATENT SPECIFICATION

(11) **EP 3 582 409 B1**
(45) Date of publication and mention of the grant of the patent: **28.10.2026**
(21) Application number: 19170542.5
(22) Date of filing: 02.08.2012
(51) Int. Cl.: H04B 10/07, H04J 3/06, H04J 3/14

(54) **METHOD AND DEVICE FOR DETECTING SYMMETRY OF OPTICAL FIBER**
VERFAHREN UND VORRICHTUNG ZUR ERKENNUNG DER SYMMETRIE VON GLASFASERN
PROCÉDÉ ET DISPOSITIF POUR DÉTECTER LA SYMÉTRIE DE FIBRE OPTIQUE

(30) Priority: 17.01.2012 CN 201210014084
(43) Date of publication of application: 18.12.2019
(62) Document number(s) of the earlier application(s) in accordance with Art. 76 EPC: 12866298.8 / 2 800 287
(73) Proprietor: Huawei Technologies Co., Ltd., Shenzhen, Guangdong 518129 (CN)
(72) Inventor: Cheng, Yong, Shenzhen, Guangdong 518129 (CN); Wei, Wei, Shenzhen, Guangdong 518129 (CN); Wang, Yong, Shenzhen, Guangdong 518129 (CN)
(74) Representative: Epping - Hermann - Fischer

(56) References cited:
- EP-B1- 2 615 752
- WO-A1-2012/048975
- US-A1- 2011 122 775
- SVEN MEIER ET AL: "IEEE 1588 applied in the environment of high availability LANs", INFORMATION SCIENCES AND SYSTEMS, 2007. CISS '07. 41ST ANNUAL CON FERENCE ON, IEEE, PI, 1 October 2007 (2007-10-01), pages 100 - 104, XP031161286, ISBN: 978-1-4244-1063-7
- "Precision clock synchronization protocol for networked measurement and control systems", IEC 61588:2009, IEC, 3, RUE DE VAREMBÉ, PO BOX 131, CH-1211 GENEVA 20, SWITZERLAND, 27 February 2009 (2009-02-27), pages 1 - 287, XP082001773

## Description

### TECHNICAL FIELD

The present disclosure relates to the field of communications technologies, and in particular to a method for detecting symmetry of optical fibers and a device thereof.

### BACKGROUND

With the development of 3^{rd} generation mobile telecommunications (the English full name is 3^{rd} Generation Mobile Telecommunications, hereinafter referred briefly as 3G) technology/the long term evolution (the English full name is Long Term Evolution, hereinafter referred briefly as LTE) technology, a higher requirement of time synchronization performance for communication network is desirable. There are some problems in the existing global positioning system (the English full name is Global Positioning System, hereinafter referred as briefly GPS) for time synchronization, such as the difficulties in location for installation, maintenance and laying feeder cable, and the high safety hazard and cost, hence how to realize a high-accuracy ground time synchronization is very important.

1588V2 high-accuracy time-recovery technology comes into being under the requirement for the high-accuracy ground time synchronization. The 1588V2 high-accuracy time-recovery technology is realized basing on the symmetry of the back-and-forth optical fiber links (hereinafter referred to as symmetry of optical fibers). In the process of cutting in and maintaining a network, the slight asymmetry of the back-and-forth optical fiber links (hereinafter referred to as symmetry of optical fibers) may be introduced, hence there may occur error and effect accuracy if employing the 1588V2 high-accuracy time-recovery technology. Therefore, the detection of symmetry of optical fibers affects the accuracy of the 1588V2 high-accuracy time-recovery technology.

At present, the detection for the symmetry of the optical fiber in network is mainly implemented manually, thereby producing a high manual maintenance cost and a long positioning time. In addition, once asymmetry of optical fibers occurs in the network, a long-time detection caused accordingly may affect the service.
US 2011/0122775 A1 discloses a method and system for analyzing and qualifying route in packet networks. With the method and system, routes of a packet network are analyzed according to various transit delay metrics. Preferred packet network routes are selected between source and destination based on these metrics. In packet network employing boundary clocks and transparent clocks, faulty boundary clocks and faulty transparent clocks are identified using the metrics.
WO 2012/048975 A1 which is state of the Art according to Art. 54 (3) EPC, discloses a method for measuring asymmetry in propagating delay of first and second links which connect a first node to a second node of a communication network. The method includes measuring a round trip delay of the first link. The round trip delay can be measured by transmitting a test signal from the first node to the second node over the first link and receiving a reply to the test signal from the second node over the first link. The method further includes measuring a round trip delay of the second link. The round trip delay can be measured by transmitting a test signal to the second node over the second link. A difference in the propagation delay of the first link with respect to the second link is determined using the measured round trip delays of the first link and the second link.

### SUMMARY

In view of this, a method for detecting symmetry of optical fibers and a device thereof are provided in this disclosure, where the cost of detecting the symmetry of the optical fibers may be reduced, and efficiency of detecting the symmetry of optical fibers may be improved. The invention is defined in the claims.

Firstly, a method for detecting symmetry of optical fibers is provided, including:
receiving, by a boundary clock, a first timestamp message carrying a first timestamp via a slave port, and a second timestamp message carrying a second timestamp via a passive port; and
determining, by the boundary clock, symmetry of optical fibers according to at least the first timestamp and the second timestamp.

Secondly, a device for detecting symmetry of optical fibers is provided, including:
a receiving module, configured to receive a first timestamp message carrying a first timestamp via a slave port, and to receive a second timestamp message carrying a second timestamp via a passive port; and
a determining module, configured to determine symmetry of optical fibers according to at least the first timestamp and the second timestamp.

According to the method and device for detecting symmetry of optical fibers provided in the embodiments of the disclosure, the symmetry of optical fibers is determined according to the first timestamp received by the slave port and the second timestamp received by the passive port, hence it may be monitored in real time whether there is any asymmetric optical fiber link in the current network, and the detection efficiency may be improved and the maintenance cost may be reduced.

### BRIEF DESCRIPTION OF THE DRAWINGS

In order to clarify the technical solutions in the embodiments of the disclosure or in the conventional technology, the attached drawing may be briefly introduced in the following. Obviously, the drawings to be described in the following are only part of the embodiments, and those skilled in the art may further obtain other drawings according to these drawings without creative work.
Figure 1 is a structure diagram of a typical network for clock synchronization.
Figure 2 is a schematic flow diagram of a method for detecting symmetry of optical fibers according to embodiment 1 of the disclosure.
Figure 3 is a schematic diagram of the synchronization principle of E2E model.
Figure 4 is an architecture diagram of a network for achieving a method for detecting the symmetry of an optical fiber sending-receiving link according to embodiment 2 of the disclosure.
Figure 5 is a schematic structure diagram of a device for detecting symmetry of an optical fiber sending-receiving link according to embodiment 3 of the disclosure.
Figure 6 is a schematic structure diagram of a determining module of the device for detecting symmetry of optical fibers according to the embodiment 3 of the disclosure.
Figure 7 is another schematic structure diagram of a device for detecting symmetry of optical fibers according to the embodiment 3 of the disclosure.

### DETAILED DESCRIPTION

The technical solutions according to the embodiments of the present application will be described in more details in conjunction with the attached drawings, to make the solutions better understood by those skilled in the art. The disclosed embodiments are only the preferable implementations of the disclosure and the disclosure is not meant to be limited to these embodiments.

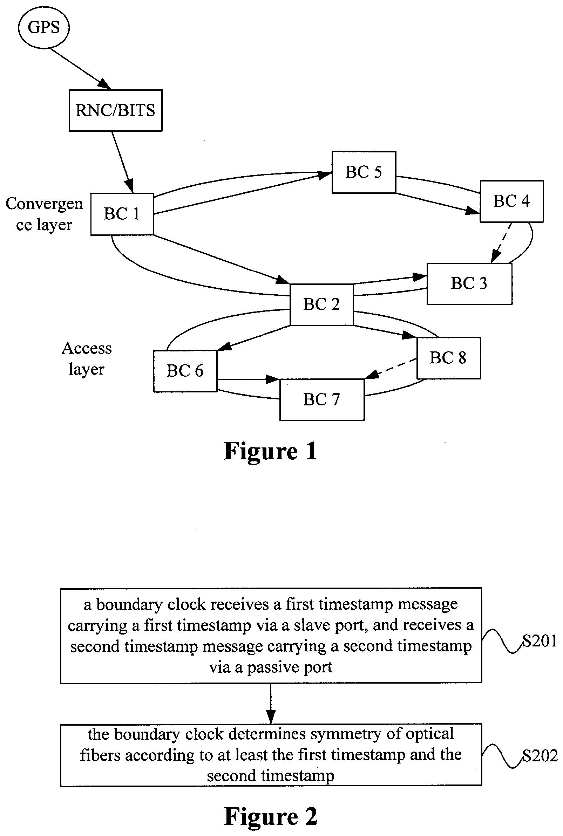

Figure 1 is a structure diagram of a typical network for clock synchronization. A boundary clock (the English full name is Boundary Clock, hereinafter referred briefly as BC) has multiple ports for time synchronization, where the BC is configured to receive a synchronous time from an upstream clock node via one of the ports, and to release the synchronous time to a downstream clock node via the other ports. In the conventional technology, the ports of the BC includes:
a master port (Master Port), configured to release a synchronous time;
a slave port (Slave Port), configured to receive the synchronous time;
a passive port (Passive Port) which is a backup port for the slave port. In the case that the slave port is switched off, the passive port may act as a slave port; in the case that the slave port runs normally, the passive port may neither receive the synchronous time nor release the synchronous time.

Compared with the conventional technology, in the embodiments of the disclosure, the passive port may receive the synchronous time in the case that the slave port runs normally, for instance, which may be achieved by changing the conditions for sending and receiving timestamp message in protocol, or writing the passive port as a slave port.

### Embodiment 1

Figure 2 is a schematic flow diagram of a method for detecting symmetry of optical fibers according to the embodiment 1 of the disclosure. As shown in Figure 2, the method includes:
S201, a boundary clock receives a first timestamp message carrying a first timestamp via a slave port (the English full name is Slave Port), and receives a second timestamp message carrying a second timestamp via a passive port (the English full name is Passive Port).S202, the boundary clock determines symmetry of optical fibers according to at least the first timestamp and the second timestamp.

Alternatively, the process that the boundary clock determines the symmetry of the optical fibers according to at least the first timestamp and the second timestamp may include: the boundary clock compares the first timestamp with the second timestamp; if a difference value between the first timestamp and the second timestamp is larger than a first preset value, the boundary clock determines that the optical fibers are not symmetric.

Alternatively, the process that the boundary clock compares the first timestamp and the second timestamp may include: the boundary clock calculates a first time offset between the boundary clock and a node sending the first timestamp message according to the first timestamp; the boundary clock calculates a second time offset between the boundary clock and a node sending the second timestamp message according to the second timestamp; the boundary clock compares the first time offset with the second time offset, where a difference value between the first time offset and the second time offset is the difference value between the first timestamp and the second timestamp.

Alternatively, if it is determined that the optical fibers are not symmetric, an alarm may be generated and sent to administrator.

Taking the scenario in Figure 1 for example, the embodiment 1 of the disclosure may be further specified. As shown in the scenario in Figure 1, BC1, BC2 and BC3 compose a primary path, and BC1, BC5, BC4 and BC3 compose a backup path. If the primary path malfunctions, the backup path may act as a primary path; hence the reliability of network may be enhanced. BC3 includes a slave port and a passive port.

BC1 receives a standard time from a GPS source via a radio network controller (the English full name is Radio Network Controller, hereinafter referred as RNC) or a background intelligent transfer service (the English full name is Background Intelligent Transfer Service, hereinafter referred as BITS). And BC1 sends a timestamp message to BC2 and BC5, where the timestamp message carries the time at which BC1 sends the timestamp message as the timestamp (timestamp A).

On receiving the message, BC2 may reset a timestamp (timestamp B) according to timestamp A carried in the timestamp message and a delay time between BC1 and BC2, and send a timestamp message (hereinafter referred as a first timestamp message) which carries timestamp B to BC3. The first timestamp message includes a sync (sync) message and a delay (delay) message of 1588 protocol, where the delay message is a Delay_Resp message sent from BC2 to BC3. Timestamp B includes timestamp B1 carried in the sync message and timestamp B2 carried in the Delay_Resp message.

Similarly, BC5 and BC4 may reset the timestamp in a way above according to the timestamp message sent by an upstream node. In the scenario in Figure 1, BC4 may send a timestamp message (hereinafter referred as a second timestamp message) which carries timestamp C to BC3. The second time stamp message includes a sync message and a delay message of 1588 protocol, where the delay message is a Delay_Resp message sent from BC4 to BC3. Timestamp C includes timestamp C1 carried in the sync message and timestamp C2 carried in the Delay_Resp message.

BC3 receives the first timestamp message via the slave port, receives the second timestamp message via the passive port, and compares timestamp B carried in the first timestamp message with timestamp C carried in the second timestamp message. For example, a first time offset (offset 1) between BC3 and BC2 is calculated according to timestamp B, and a second time offset (offset 2) between BC3 and BC4 is calculated according to timestamp C; it is compared offset 1 with offset 2; if a difference value between offset 1 and offset 2 exceeds a preset tolerable error value, an alarm may be sent out.

Alternatively, the values of the first time offset and the second time offset may be obtained according to the synchronization principle of End to End model.

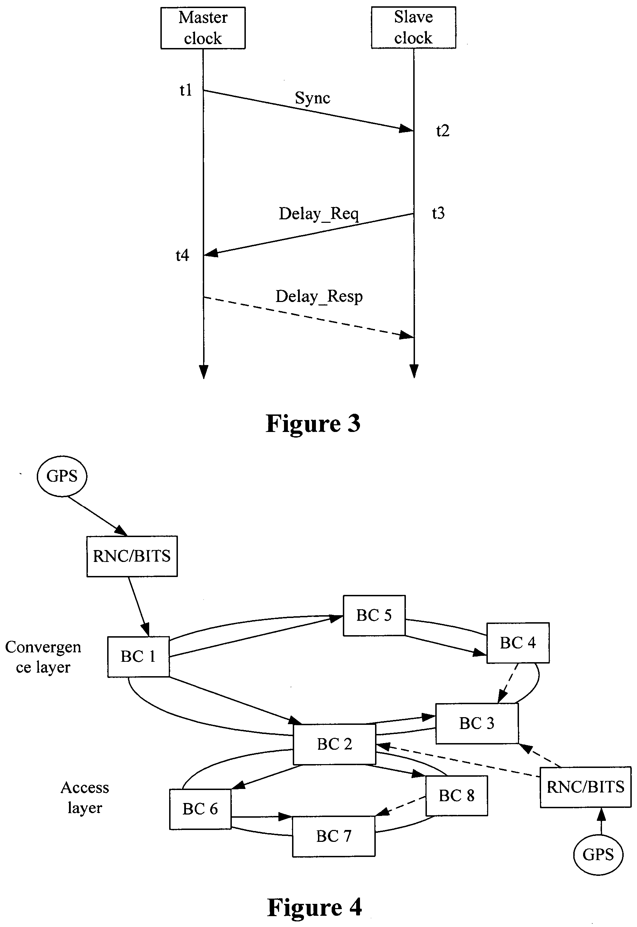

Figure 3 is a schematic diagram of the synchronization principle of E2E model. As shown in Figure 3, a time offset between the master clock and the slave clock is [((t2-t1)-(t4-t3) )/2] + [(Delay1-Delay2)/2], where Delay 1 is transmission delay time from a master device to a slave device, and Delay 2 is transmission delay time from the slave device to the master device. t1 is an instant when the master device sends a sync message to the slave device; t2 is an instant when the slave device receives the sync message; t3 is an instant when the slave device sends a delay request message (Delay_Req) to the master device; t4 is an instant when the master device receives the Delay_Req.

t1, i.e., timestamp B1 or C1 mentioned above, is carried in the sync message sent from the master device to the slave device; t4, i.e., timestamp B2 or C2 mentioned above, is carried in the delay response message (Delay_Resp). t2 and t3 may be obtained from the slave device itself; hence the time offset between the master clock and the slave clock may be obtained by sending and receiving the sync message and the delay message (including the delay request message and the delay response message) between the master device and the slave device. The master clock and the slave clock, as well as the master device and the slave device, are both relative. For example, in the case that offset 1 between BC3 and BC2 is calculated, BC3 is synchronized by BC2, hence BC2 is a master device and the clock of BC2 is a master clock, and BC3 is a slave device and the clock of BC3 is a slave clock. Similarly, in the case that offset 2 between BC3 and BC4 is calculated, BC3 is synchronized by BC4, hence BC4 is a master device and the clock of BC4 is a master clock, and BC3 is a slave device and the clock of BC3 is a slave clock.

According to the method for detecting symmetry of optical fibers in embodiment 1, the symmetry of the optical fibers is determined according to the first timestamp received by the slave port and the second timestamp received by the passive port, hence it may be monitored in real time whether there is any asymmetric optical fiber link in the current network, an accurate offset may be obtained, and the detection efficiency may be improved and the maintenance cost may be reduced.

### Embodiment 2

Alternatively, the S202 mentioned above may further include:
the boundary clock determines the symmetry of the optical fibers according to the first timestamp, the second timestamp and a standard time provided by a GPS source.

Alternatively, the process that the boundary clock determines the symmetry of optical fibers according to the first timestamp, the second timestamp and the standard time provided by the GPS source may include: the boundary clock compares the first timestamp with the second timestamp, and compares the first timestamp with the standard time provided by the GPS source; if the difference value between the first timestamp and the second timestamp, and the difference value between the first timestamp and the standard time provided by the GPS source are both larger than a second preset value, the boundary clock determines that the optical fibers are not symmetric.

As shown in Figure 4, if the primary path and the backup path both malfunction, the errors introduced due to the asymmetry of optical fibers may be offset. In the case that BC3 is additionally introduced with one or multiple GPS sources, BC3 may obtain the difference value between the first timestamp and the second timestamp, as well as the difference value between the first timestamp and the standard time provided by the GPS source, thereby further improving the accuracy of detecting the symmetry of optical fibers.

### Embodiment 3

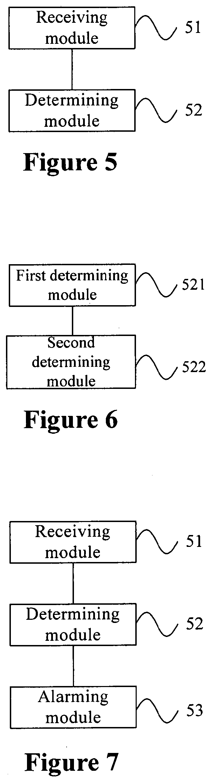

Figure 5 is a schematic structure diagram of a device for detecting symmetry of optical fibers provided according to embodiment 3 of the disclosure. The device includes:
a receiving module 51, configured to receive a first timestamp message carrying a first timestamp via a slave port, and to receive a second timestamp message carrying a second timestamp via a passive port; and
a determining module 52, configured to determine the symmetry of the optical fibers according to at least the first timestamp and the second timestamp.

Alternatively, Figure 6 is a schematic structure diagram of a determining module of the device for detecting symmetry of optical fibers according to embodiment 3 of the disclosure. As shown in Figure 6, the determining module 52 may include:
a first determining module 521, configured to compare the first timestamp with the second timestamp; and determine that the optical fibers are not symmetric, if a difference value between the first timestamp and the second timestamp is larger than a first preset value; and/or
a second determining module 522, configured to compare the first timestamp with the second timestamp, and compares the first timestamp with a standard time provided by a GPS source; and determine that the optical fibers are not symmetric, if the difference value between the first timestamp and the second timestamp and a difference value between the first timestamp and the standard time provided by the GPS source are both larger than a second preset value.

Alternatively, Figure 7 is another schematic structure diagram of a device for detecting symmetry of optical fibers according to embodiment 3 of the disclosure. As shown in Figure 7, the device may further include:
an alarming module 53, configured to generate and send an alarm to administrator if it is determined that the optical fibers are not symmetric.

The detecting method performed in the detecting device according to the embodiment 3 is the same as the method for detecting symmetry of optical fibers according to embodiment 1, hence it is unnecessary to go into details.

According to the device for detecting symmetry of optical fibers in embodiment 3, the symmetry of the optical fibers is determined according to the first timestamp received by the slave port and the second timestamp received by the passive port, hence it may be monitored in real time whether there is any asymmetric optical fiber link in the current network, an accurate offset may be obtained, and the detection efficiency may be improved and the maintenance cost may be reduced.

According to the foregoing description of the embodiments, those skilled in the art may understand clearly that the disclosure may be implemented by software and necessary general hardware or only by hardware; however, the former is preferable. Basing on that, the disclosure may be implemented by software product, where the software product may be stored in readable storage medium, such as floppy, hard disk or optical disk, including multiple instructions (personal computer, server or network device) to implement the methods in embodiments of the disclosure.

## Claims

1. A method, comprising:
receiving through a first optical fiber, by a boundary clock, a first timestamp message carrying a first timestamp via a slave port located on a primary path, wherein the first time stamp message includes a sync message and a delay message of 1588 protocol, where the delay message is a delay response, Delay_Resp, message, receiving through a second optical fiber, a second timestamp message carrying a second timestamp via a passive port located on a backup path, wherein the second timestamp message includes a sync message and a delay message of 1588 protocol, where the delay message is a Delay_Resp message, wherein the boundary clock has multiple ports for time synchronization, where the boundary clock is configured to receive a synchronous time from an upstream clock node via one of the ports, and to release a synchronous time to a downstream clock node via the other ports and wherein the passive port is a backup port for the slave port and the slave port is configured to receive the synchronous time;
determining, by the boundary clock, a difference value between the first timestamp and the second timestamp; and
determining based on the difference value, by the boundary clock, if symmetry between the first optical fiber and the second optical fiber exists.

2. The method according to claim 1, further comprising:
determining that a status exists if the difference value between the first timestamp and the second timestamp is larger than a first preset value.

3. The method according to claim 2, wherein the status is that optical fibers are not symmetric.

4. The method according to claim 1, further comprising:
determining, by the boundary clock, whether a status exists according to the first timestamp, the second timestamp and a standard time provided by a GPS source.

5. The method according to claim 4, wherein determining, by the boundary clock, whether the status exists according to the first timestamp, the second timestamp and the standard time provided by the GPS source comprises:
comparing, by the boundary clock, the first timestamp with the second timestamp, and the first timestamp with the standard time provided by the GPS source, and
determining that the status exists, if a difference value between the first timestamp and the second timestamp and a difference value between the first timestamp and the standard time provided by the GPS source are both larger than a second preset value.

6. The method according to claim 5, wherein the status is that optical fibers are not symmetric.

7. The method according to any of claims 2 to 6, wherein the boundary clock generates and sends an alarm to administrator, if it is determined that the status exists.

8. A device, comprising:
a receiving module, configured to receive through a first optical fiber, a first timestamp message carrying a first timestamp via a slave port, located on a primary path, wherein the first time stamp message includes a sync message and a delay message of 1588 protocol, where the delay message is a delay response, Delay_Resp, message, and to receive through a second optical fiber, a second timestamp message carrying a second timestamp via a passive port, located on a backup path, wherein the second timestamp message includes a sync message and a delay message of 1588 protocol, where the delay message is a Delay_Resp message, wherein the boundary clock has multiple ports for time synchronization, where the boundary clock is configured to receive a synchronous time from an upstream clock node via one of the ports, and to release a synchronous time to a downstream clock node via the other ports and wherein the passive port is a backup port for the slave port and the slave port is configured to receive the synchronous time;
a determining module, configured to determine a difference value between the first timestamp and the second timestamp, and to determine based on the difference value, if symmetry between the first optical fiber and the second optical fiber exists.

9. The device according to claim 8, wherein the determining module comprises:
a first determining module, configured to compare the first timestamp with the second timestamp, and to determine that a status exists, if the difference value between the first timestamp and the second timestamp is larger than a first preset value.

10. The device according to claim 8 or 9, wherein the determining module comprises:
a second determining module, configured to compare the first timestamp with the second timestamp, to compare the first timestamp with a standard time provided by a GPS source, and to determine that a status exists, if a difference value between the first timestamp and the second timestamp and a difference value between the first timestamp and the standard time provided by the GPS source are both larger than a second preset value.

11. The device according to any of claims 8 to 10, wherein the status is that optical fibers are not symmetric.

12. The device according to any of claims 9 to 11, wherein the device further comprises:
an alarming module, configured to generate and send an alarm to administrator if it is determined that the status exists.

## Patentansprüche

1. Verfahren, das Folgendes umfasst:
Empfangen, über eine erste Lichtleitfaser durch eine "Boundary Clock", einer ersten Zeitstempelnachricht, die einen ersten Zeitstempel führt, über einen Slave-Port, der sich auf einem primären Pfad befindet, wobei die erste Zeitstempelnachricht eine Synchronisationsnachricht und eine Verzögerungsnachricht des 1588-Protokolls beinhaltet, wobei die Verzögerungsnachricht eine Verzögerungsantwort- bzw. Delay_Resp-Nachricht ist, Empfangen, über eine zweite Lichtleitfaser, einer zweiten Zeitstempelnachricht, die einen zweiten Zeitstempel führt, über einen passiven Port, der sich auf einem Reservepfad befindet, wobei die zweite Zeitstempelnachricht eine Synchronisationsnachricht und eine Verzögerungsnachricht des 1588-Protokolls beinhaltet, wobei die Verzögerungsnachricht eine Delay_Resp-Nachricht ist, wobei die "Boundary Clock" mehrere Ports zur Zeitsynchronisation aufweist, wobei die "Boundary Clock" dazu ausgelegt ist, eine synchrone Zeit von einem Upstream-Uhrenknoten über einen der Ports zu empfangen und eine synchrone Zeit über die anderen Ports an einen Downstream-Uhrenknoten freizugeben, und wobei der passive Port ein Reserveport für den Slave-Port ist und der Slave-Port dazu ausgelegt ist, die synchrone Zeit zu empfangen;
Bestimmen, durch die "Boundary Clock", eines Differenzwerts zwischen dem ersten Zeitstempel und dem zweiten Zeitstempel; und
Bestimmen, basierend auf dem Differenzwert durch die "Boundary Clock", ob eine Symmetrie zwischen der ersten Lichtleitfaser und der zweiten Lichtleitfaser vorliegt.

2. Verfahren nach Anspruch 1, das ferner Folgendes umfasst:
Bestimmen, dass ein Status vorliegt, wenn der Differenzwert zwischen dem ersten Zeitstempel und dem zweiten Zeitstempel größer als ein erster voreingestellter Wert ist.

3. Verfahren nach Anspruch 2, wobei der Status darin besteht, dass Lichtleitfasern nicht symmetrisch sind.

4. Verfahren nach Anspruch 1, das ferner Folgendes umfasst:
Bestimmen, durch die "Boundary Clock", ob ein Status vorliegt, gemäß dem ersten Zeitstempel, dem zweiten Zeitstempel und einer durch eine GPS-Quelle bereitgestellten Standardzeit.

5. Verfahren nach Anspruch 4, wobei das Bestimmen, durch die "Boundary Clock", ob der Status vorliegt, gemäß dem ersten Zeitstempel, dem zweiten Zeitstempel und der durch die GPS-Quelle bereitgestellten Standardzeit, Folgendes umfasst:
Vergleichen, durch die "Boundary Clock", des ersten Zeitstempels mit dem zweiten Zeitstempel und des ersten Zeitstempels mit der durch die GPS-Quelle bereitgestellten Standardzeit und
Bestimmen, dass der Status vorliegt, wenn sowohl ein Differenzwert zwischen dem ersten Zeitstempel und dem zweiten Zeitstempel als auch ein Differenzwert zwischen dem ersten Zeitstempel und der durch die GPS-Quelle bereitgestellten Standardzeit größer als ein zweiter voreingestellter Wert sind.

6. Verfahren nach Anspruch 5, wobei der Status darin besteht, dass Lichtleitfasern nicht symmetrisch sind.

7. Verfahren nach einem der Ansprüche 2 bis 6, wobei die "Boundary Clock" einen Alarm erzeugt und an den Administrator sendet, wenn bestimmt wird, dass der Status vorliegt.

8. Vorrichtung, die Folgendes umfasst:
ein Empfangsmodul, ausgelegt zum Empfangen, über eine erste Lichtleitfaser, einer ersten Zeitstempelnachricht, die einen ersten Zeitstempel führt, über einen Slave-Port, der sich auf einem primären Pfad befindet, wobei die erste Zeitstempelnachricht eine Synchronisationsnachricht und eine Verzögerungsnachricht des 1588-Protokolls beinhaltet, wobei die Verzögerungsnachricht eine Verzögerungsantwort- bzw. Delay_Resp-Nachricht ist, und zum Empfangen, über eine zweite Lichtleitfaser, einer zweiten Zeitstempelnachricht, die einen zweiten Zeitstempel führt, über einen passiven Port, der sich auf einem Reservepfad befindet, wobei die zweite Zeitstempelnachricht eine Synchronisationsnachricht und eine Verzögerungsnachricht des 1588-Protokolls beinhaltet, wobei die Verzögerungsnachricht eine Delay_Resp-Nachricht ist, wobei die "Boundary Clock" mehrere Ports zur Zeitsynchronisation aufweist, wobei die "Boundary Clock" dazu ausgelegt ist, eine synchrone Zeit von einem Upstream-Uhrenknoten über einen der Ports zu empfangen und eine synchrone Zeit über die anderen Ports an einen Downstream-Uhrenknoten freizugeben, und wobei der passive Port ein Reserveport für den Slave-Port ist und der Slave-Port dazu ausgelegt ist, die synchrone Zeit zu empfangen;
ein Bestimmungsmodul, ausgelegt zum Bestimmen eines Differenzwerts zwischen dem ersten Zeitstempel und dem zweiten Zeitstempel und zum Bestimmen, basierend auf dem Differenzwert, ob eine Symmetrie zwischen der ersten Lichtleitfaser und der zweiten Lichtleitfaser vorliegt.

9. Vorrichtung nach Anspruch 8, wobei das Bestimmungsmodul Folgendes umfasst:
ein erstes Bestimmungsmodul, ausgelegt zum Vergleichen des ersten Zeitstempels mit dem zweiten Zeitstempel und zum Bestimmen, dass ein Status vorliegt, wenn der Differenzwert zwischen dem ersten Zeitstempel und dem zweiten Zeitstempel größer als ein erster voreingestellter Wert ist.

10. Vorrichtung nach Anspruch 8 oder 9, wobei das Bestimmungsmodul Folgendes umfasst:
ein zweites Bestimmungsmodul, ausgelegt zum Vergleichen des ersten Zeitstempels mit dem zweiten Zeitstempel, zum Vergleichen des ersten Zeitstempels mit einer durch eine GPS-Quelle bereitgestellten Standardzeit und zum Bestimmen, dass ein Status vorliegt, wenn sowohl ein Differenzwert zwischen dem ersten Zeitstempel und dem zweiten Zeitstempel als auch ein Differenzwert zwischen dem ersten Zeitstempel und der durch die GPS-Quelle bereitgestellten Standardzeit größer als ein zweiter voreingestellter Wert sind.

11. Vorrichtung nach einem der Ansprüche 8 bis 10, wobei der Status darin besteht, dass Lichtleitfasern nicht symmetrisch sind.

12. Vorrichtung nach einem der Ansprüche 9 bis 11, wobei die Vorrichtung ferner Folgendes umfasst:
ein Alarmmodul, ausgelegt zum Erzeugen und Senden eines Alarms an den Administrator, wenn bestimmt wird, dass der Status vorliegt.

## Revendications

1. Procédé comprenant :
la réception au moyen d'une première fibre optique, par une horloge boundary clock, d'un premier message d'horodatage portant un premier horodatage par l'intermédiaire d'un port esclave situé sur un chemin primaire, le premier message d'horodatage comprenant un message de synchronisation et un message de retard de protocole 1588, le message de retard étant une message de réponse de retard, Delay_Resp, recevant au moyen d'une seconde fibre optique, un second message d'horodatage portant un second horodatage par l'intermédiaire d'un port passif situé sur un chemin de secours, le second message d'horodatage comprenant un message de synchronisation et un message de retard de protocole 1588, le message de retard étant un message Delay_Resp, l'horloge boundary clock ayant plusieurs ports pour la synchronisation temporelle, l'horloge boundary clock étant configurée pour recevoir une heure synchrone d'un nœud d'horloge amont par l'intermédiaire de l'un des ports, et pour relâcher un temps synchrone vers un nœud d'horloge aval par l'intermédiaire des autres ports et le port passif étant un port de secours pour le port esclave et le port esclave étant configuré pour recevoir le temps synchrone ;
la détermination, par l'horloge boundary clock, d'une valeur de différence entre le premier horodatage et le second horodatage ; et
la détermination sur la base de la valeur de différence, par l'horloge boundary clock, si une symétrie existe entre la première fibre optique et la seconde fibre optique.

2. Procédé selon la revendication 1, comprenant en outre :
la détermination de l'existence d'un état si la valeur de différence entre le premier horodatage et le second horodatage est supérieure à une première valeur prédéfinie.

3. Procédé selon la revendication 2, l'état étant que les fibres optiques ne sont pas symétriques.

4. Procédé selon la revendication 1, comprenant en outre :
la détermination, par l'horloge boundary clock, si un état existe en fonction du premier horodatage, du second horodatage et d'un temps standard fourni par une source GPS.

5. Procédé selon la revendication 4, la détermination, par l'horloge boundary clock, si l'état existe en fonction du premier horodatage, du second horodatage et de l'heure standard fournies par la source GPS comprenant :
la comparaison, par l'horloge boundary clock, du premier horodatage avec le second horodatage, et du premier horodatage avec l'heure standard fournie par la source GPS, et
la détermination que l'état existe, si une valeur de différence entre le premier horodatage et le second horodatage et une valeur de différence entre le premier horodatage et l'heure standard fournie par la source GPS sont toutes deux supérieures à une seconde valeur prédéterminée.

6. Procédé selon la revendication 5, l'état étant que les fibres optiques ne sont pas symétriques.

7. Procédé selon l'une quelconque des revendications 2 à 6, l'horloge boundary clock générant et envoyant une alarme à l'administrateur, s'il est déterminé que l'état existe.

8. Dispositif, comprenant :
un module de réception, configuré pour recevoir au moyen d'une première fibre optique, un premier message d'horodatage portant un premier horodatage par l'intermédiaire d'un port esclave, situé sur un chemin primaire, le premier message d'horodatage comprenant un message de synchronisation et un message de retard de protocole 1588, le message de retard étant un message de réponse de retard, Delay_Resp, et pour recevoir au moyen d'une seconde fibre optique un second message d'horodatage portant un second horodatage par l'intermédiaire d'un port passif, situé sur un chemin de secours, le second message d'horodatage comprenant un message de synchronisation et un message de retard de protocole 1588, le message de retard étant un message Delay_Resp, l'horloge boundary clock possédant plusieurs ports pour la synchronisation temporelle, l'horloge boundary clock étant configurée pour recevoir un temps synchrone d'un nœud d'horloge amont par l'intermédiaire de l'un des ports, et pour relâcher un temps synchrone vers un nœud d'horloge aval par l'intermédiaire des autres ports et le port passif étant un port de secours pour le port esclave et le port esclave étant configuré pour recevoir le temps synchrone ;
un module de détermination, configuré pour déterminer une valeur de différence entre le premier horodatage et le second horodatage, et pour déterminer, sur la base de la valeur de différence, si une symétrie existe entre la première fibre optique et la seconde fibre optique.

9. Dispositif selon la revendication 8, le module de détermination comprenant en outre :
un premier module de détermination, configuré pour comparer le premier horodatage avec le second horodatage, et pour déterminer qu'un état existe, si la valeur de différence entre le premier horodatage et le second horodatage est supérieure à une première valeur prédéterminée.

10. Dispositif selon la revendication 8 ou 9, le module de détermination comprenant en outre :
un second module de détermination, configuré pour comparer le premier horodatage avec le second horodatage, pour comparer le premier horodatage avec un temps standard fourni par une source GPS, et pour déterminer qu'un état existe, si une valeur de différence entre le premier horodatage et le second horodatage et une valeur de différence entre le premier horodatage et le temps standard fourni par la source GPS sont toutes deux supérieures à une seconde valeur prédéterminée.

11. Dispositif selon l'une quelconque des revendications 8 à 10, l'état étant que les fibres optiques ne sont pas symétriques.

12. Dispositif selon l'une quelconque des revendications 9 à 11, le dispositif comprenant en outre :
un module d'alarme, configuré pour générer et envoyer une alarme à l'administrateur s'il est déterminé que l'état existe.
